# EUROPÄISCHE PATENTSCHRIFT

(11) **EP 2 766 163 B1**
(45) Veröffentlichungstag und Bekanntmachung des Hinweises auf die Patenterteilung: **16.12.2015**
(21) Anmeldenummer: 12781261.8
(22) Anmeldetag: 12.10.2012
(51) Int. Cl.: B29B 13/10, B29B 17/04, B02C 18/08, B01F 15/02, B02C 18/12, B29B 7/66, B29B 17/00, B29C 47/60, B29C 47/58, B29C 47/64, B29C 47/76, B29C 47/10, B29C 47/00, B29C 47/38, B29C 47/40, B29C 47/68, B29K 105/26

(54) **VORRICHTUNG ZUM AUFBEREITEN VON KUNSTSTOFFMATERIAL**
APPARATUS FOR PROCESSING PLASTIC MATERIAL
DISPOSITIF POUR PRÉPARER UNE MATIÈRE PLASTIQUE

(30) Priorität: 14.10.2011 AT 15052011
(43) Veröffentlichungstag der Anmeldung: 20.08.2014
(73) Patentinhaber: EREMA Engineering Recycling Maschinen und Anlagen Gesellschaft m.b.H., 4052 Ansfelden (AT)
(72) Erfinder: FEICHTINGER, Klaus, 4040 Linz (AT); HACKL, Manfred, 4040 Linz-Urfahr (AT)
(74) Vertreter: Wildhack & Jellinek
(86) Internationale Anmeldenummer: PCT/AT2012/050157
(87) Internationale Veröffentlichungsnummer: WO 2013/052985

(56) Entgegenhaltungen:
- EP-A1- 0 701 505
- EP-A1- 1 233 855
- EP-A1- 1 273 412
- EP-A1- 2 012 997
- EP-A1- 2 196 255
- WO-A1-2010/118447
- AT-B- 400 315
- DE-A1- 10 140 215
- BACHER H: "RECYCLING VON THERMOPLASTISCHEN PRIMAERABFAELLEN", PLASTVERARBEITER, HUETHIG GMBH, HEIDELBERG, DE, Bd. 46, Nr. 2, 1. Februar 1995 (1995-02-01), Seite 94,97/98, XP000494391, ISSN: 0032-1338

## Beschreibung

Die Erfindung betrifft eine Vorrichtung gemäß dem Oberbegriff des Anspruchs 1.

Aus dem Stand der Technik sind derartige Verfahren und Vorrichtungen in ähnlicher Form bereits seit langem bekannt. So ist bekannt, Kunststoffmaterial, das recycliert werden soll, zuerst in einem Schneidverdichter bei erhöhter Temperatur und, gegebenenfalls unter Beaufschlagung von Vakuum, aufzubereiten, anschließend in einem Extruder aufzuschmelzen und die Schmelze zu filtrieren, dann zu entgasen und abschließend beispielsweise zu granulieren. Vorrichtungen zur Durchführung solcher Verfahren sind beispielsweise aus der EP 123 771 B, der EP 390 873 B oder der AT 396 900 B bekannt.

Weiters existieren zahlreiche Verfahren und Vorrichtungen um einzelne Schritte, z.B. die Entgasung der Schmelze, zu optimieren. So kann beispielsweise die Ausbildung einer Druckloszone vor den Entgasungsöffnungen vorgesehen, um für eine verlässliche Entgasung des Kunststoffmaterials zu sorgen. Auch existieren zahlreiche Ausführungsformen diverser Schmelzefilter zur Entfernung von festen Fremdstoffen und/oder nicht aufgeschmolzenem Restpolymer.

All dies dient in erster Linie zur Erhöhung der Qualität des Endproduktes.

Die EP 2 196 255 A1 offenbart eine Vorrichtung gemäß dem Oberbegriff des Anspruchs 1.

Den eingangs erwähnten, bekannten Schneidverdichtern bzw. Behältern ist gemeinsam, dass die Förder- bzw. Drehrichtung der Misch- und Zerkleinerungswerkzeuge und damit die Richtung, in der die Materialteilchen im Aufnahmebehälter umlaufen, und die Förderrichtung des Extruders im Wesentlichen gleich bzw. gleichsinnig sind. Diese bewusst so gewählte Anordnung war durch den Wunsch geleitet, das Material möglichst in die Schnecke zu stopfen bzw. diese zwangszufüttern. Dieser Gedanke, die Teilchen in Schneckenförderrichtung in die Förder-bzw. Extruderschnecke zu stopfen, war auch durchaus naheliegend und entsprach den gängigen Vorstellungen des Fachmannes, da die Teilchen dadurch nicht ihre Bewegungsrichtung umkehren müssen und somit keine zusätzliche Kraft für die Richtungsumkehr aufzuwenden ist. Es wurde dabei und bei davon ausgehenden Weiterentwicklungen immer danach getrachtet, eine möglichst hohe Schneckenauffüllung und eine Verstärkung dieses Stopfeffektes zu schaffen. Beispielsweise wurde auch versucht, den Einzugsbereich des Extruders konusartig zu erweitern oder die Zerkleinerungswerkzeuge sichelförmig zu krümmen, damit diese das erweichte Material spachtelartig in die Schnecke füttern können. Durch die zulaufseitige Versetzung des Extruders von einer radialen in eine tangentiale Position zum Behälter, wurde der Stopfeffekt noch weiter verstärkt und das Kunststoffmaterial vom umlaufenden Werkzeug noch stärker in den Extruder hineingefördert bzw. -gedrückt.

Derartige Vorrichtungen sind grundsätzlich funktionsfähig und arbeiten zufriedenstellend, wenngleich auch mit wiederkehrenden Problemen:
So wurde, beispielsweise bei Materialien mit einem geringen Energieinhalt, wie z.B. PET-Fasern oder -folien, oder bei Materialien mit einem frühen Klebrigkeits- oder Erweichungspunkt, wie z.B. Polymilchsäure (PLA), immer wieder der Effekt beobachtet, dass das bewusste gleichsinnige Stopfen des Kunststoffmaterials in den Einzugsbereich des Extruders unter Druck zu einem frühzeitigen Aufschmelzen des Materials unmittelbar nach oder auch im Einzugsbereich des Extruders führt. Dadurch verringert sich einerseits die Förderwirkung des Extruders, zudem kann es auch zu einem teilweisen Rückfluss dieser Schmelze in den Bereich des Schneidverdichters bzw. Aufnahmebehälters kommen, was dazu führt, dass sich noch ungeschmolzene Flakes an die Schmelze anhaften, dadurch die Schmelze wieder abkühlt und teilweise erstarrt und sich auf diese Weise ein geschwulstartiges Gebilde bzw. Konglomerat aus teilweise erstarrter Schmelze und festen Kunststoffteilchen bildet. Dadurch verstopft der Einzug des Extruders und verkleben die Misch- und Zerkleinerungswerkzeuge. In weiterer Folge verringert sich der Durchsatz des Extruders, da keine ausreichende Befüllung der Schnecke mehr vorliegt. Zudem können sich dabei die Misch- und Zerkleinerungswerkzeuge festfahren. In der Regel muss in solchen Fällen die Anlage abgestellt werden und vollständig gesäubert werden.

Außerdem treten Probleme bei solchen Polymermaterialien auf, die im Schneidverdichter bereits bis nahe an ihren Schmelzbereich erwärmt wurden. Wird hierbei der Einzugsbereich überfüllt, schmilzt das Material auf und der Einzug lässt nach.

Auch bei, meist verstreckten, streifigen, faserigen Materialien mit einer gewissen Längenausdehnung und einer geringen Dicke bzw. Steifigkeit, also beispielsweise bei in Streifen geschnittenen Kunststofffolien, ergeben sich Probleme. Dies in erster Linie dadurch, dass sich das längliche Material am ablaufseitigen Ende der Einzugsöffnung der Schnecke festhängt, wobei ein Ende des Streifens in den Aufnahmebehälter ragt und das andere Ende in den Einzugsbereich. Da sowohl die Mischwerkzeuge als auch die Schnecke gleichsinnig laufen bzw. die gleiche Förderrichtungs- und Druckkomponente auf das Material ausüben, werden beide Enden des Streifens in die gleiche Richtung zug- und druckbeaufschlagt und kann sich der Streifen nicht mehr lösen. Dies führt wiederum zu einem Anhäufen des Materials in diesem Bereich, zu einer Verengung des Querschnitts der Einzugsöffnung und zu einem schlechteren Einzugsverhalten und in weiterer Folge zu Durchsatzeinbußen. Außerdem kann es durch den erhöhten Beschickungsdruck in diesem Bereich zu einem Aufschmelzen kommen, wodurch wiederum die eingangs erwähnten Probleme auftreten.

Der vorliegenden Erfindung liegt die Aufgabe zugrunde, eine verbesserte Vorrichtung zur Recyclierung von Kunststoffen zu schaffen, die ein Endprodukt von hoher qualitativer Güte liefert, wobei die Vorrichtung mit hoher Produktivität und großem Durchsatz geführt werden kann.

Diese Aufgabe wird bei einer Vorrichtung der eingangs erwähnten Art durch die kennzeichnenden Merkmale des Anspruchs 1 gelöst.

Dabei ist zunächst vorgesehen, dass die gedachte Verlängerung der zentralen Längsachse des Extruders, wenn dieser nur eine einzige Schnecke aufweist, oder die Längsachse der der Einzugsöffnung nächstliegenden Schnecke, wenn der Extruder mehr als eine Schnecke aufweist, entgegen der Förderrichtung des Extruders an der Drehachse ohne diese zu schneiden vorbeiführt, wobei die Längsachse des Extruders, wenn dieser eine einzige Schnecke aufweist, oder die Längsachse der der Einzugsöffnung nächstliegenden Schnecke, ablaufseitig zu der zur Längsachse parallelen, von der Drehachse des Misch- und/oder Zerkleinerungswerkzeugs in Förderrichtung des Extruders nach außen gerichteten Radialen des Behälters um einen Abstand versetzt ist.

Damit ist die Förderrichtung der Mischwerkzeuge und die Förderrichtung des Extruders nicht mehr, wie aus dem Stand der Technik bekannt, gleichsinnig, sondern zumindest geringfügig gegensinnig, wodurch der eingangs erwähnte Stopfeffekt verringert wird. Durch die bewusste Umkehrung der Drehrichtung der Misch- und Zerkleinerungswerkzeuge im Vergleich zu bislang bekannten Vorrichtungen, nimmt der Beschickungsdruck auf den Einzugsbereich ab und es verringert sich das Risiko einer Überfüllung. Überschüssiges Material wird auf diese Weise nicht mit übermäßigem Druck in den Einzugsbereich des Extruders gestopft bzw. gespachtelt, sondern im Gegenteil wird überschüssiges Material sogar tendenziell wieder von dort entfernt, sodass zwar immer ausreichend Material im Einzugsbereich vorliegt, jedoch nahezu drucklos bzw. nur mit geringem Druck beaufschlagt wird. Auf diese Weise kann die Extruderschnecke ausreichend befüllt werden und immer ausreichend Material einziehen, ohne dass es zu einer Überfüllung der Schnecke und in weiterer Folge zu lokalen Druckspitzen kommt, bei denen das Material aufschmelzen könnte.

Auf diese Weise wird ein Aufschmelzen des Materials im Bereich des Extrudereinzugs verhindert, wodurch sich die betriebliche Effizienz erhöht, die Wartungsintervalle verlängern und die Stehzeiten durch allfällige Reparaturen und Säuberungsmaßnahmen verkürzt werden.

Durch die Verringerung des Beschickungsdruckes reagieren Schieber, mit denen der Befüllungsgrad der Schnecke in bekannter Weise reguliert werden kann, deutlich sensibler und der Füllgrad der Schnecke lässt sich noch genauer einstellen. Insbesondere bei schwereren Materialien, wie etwa Mahlgütern aus High-Density Polyethylen (HDPE) oder PET, lässt sich so leichter der optimale Betriebspunkt der Anlage finden.

Außerdem hat es sich als überraschend vorteilhaft erwiesen, dass Materialien, die schon bis nahe an die Schmelze erweicht wurden, besser bei dem erfindungsgemäßen gegenläufigen Betrieb eingezogen werden. Insbesondere dann, wenn das Material schon in teigigem bzw. erweichtem Zustand vorliegt, schneidet die Schnecke das Material aus dem teigigen Ring, der der Behälterwand naheliegt. Bei einer Drehrichtung in Förderrichtung der Extruderschnecke würde dieser Ring eher weitergeschoben werden und es könnte kein Abschaben durch die Schnecke erfolgen, wodurch der Einzug nachlassen würde. Dies wird durch die erfindungsgemäße Umkehr der Drehrichtung vermieden.

Außerdem können bei der Bearbeitung der oben beschriebenen streifigen bzw. faserigen Materialien die gebildeten Verhängungen bzw. Anhäufungen leichter gelöst werden bzw. werden gar nicht erst ausgebildet, da auf der in Drehrichtung der Mischwerkzeuge ablaufseitigen bzw. stromabwärts gelegenen Kante der Öffnung der Richtungsvektor der Mischwerkzeuge und der Richtungsvektor des Extruders in fast entgegengesetzte oder zumindest geringfügig gegensinnige Richtungen zeigen, wodurch sich ein länglicher Streifen nicht um diese Kante biegen und verhängen kann, sondern von der Mischtrombe im Aufnahmebehälter wieder mitgerissen wird.

Insgesamt verbessert sich durch die erfindungsgemäße Ausgestaltung das Einzugsverhalten und vergrößert sich der Durchsatz deutlich. Das Gesamtsystem aus Schneidverdichter und Extruder wird dadurch stabiler und leistungsfähiger.

Weiters ist vorgesehen, dass die Länge L der Schnecke in der vorderen Kammer, gemessen ab dem in Förderrichtung der Schnecke stromabwärts gelegenen Rand der Einzugsöffnung, bis zur im Gehäuse ausgebildeten Ausmündung des am weitesten stromaufwärts gelegenen zum Schmelzefilter führenden Kanals, in einem Bereich des 10-fachen bis 40-fachen des mittleren Nenndurchmessers d der Schnecke liegt.

Außerdem ist vorgesehen, dass der Abstand von der Einmündung des Kanals in die hintere Kammer zu der am weitesten stromaufwärts gelegenen Entgasungsöffnung in einem Bereich zwischen dem 1,5-fachen bis 15-fachen des mittleren Nenndurchmessers der Schnecke liegt.

Es hat sich überraschend gezeigt, dass man durch Vorsehung des gegensinnig drehenden Schneidverdichters bei höheren Temperaturen arbeiten kann und eine bessere Homogenisierung des Materials erreichbar ist. Es ist daher möglich, die Strecke bis zum Schmelzefilter zu verkürzen bzw. den Schmelzefilter früher anzuordnen. Außerdem verbessert sich durch die erhöhte Temperatur die Entgasung und man kann auch die Strecke zur ersten Entgasungsöffnung verkürzen. Die Verarbeitung des Materials im Schneidverdichter bei höherer Temperatur ermöglicht es leicht flüchtigen Gasen schon in diesem Bereich das Material zu verlassen. Das ist insofern besonders effizient, da die Oberfläche der meist folienartigen bzw. mahlgutartigen Teilchen groß ist und dadurch Feuchte oder leicht flüchtige Stoffe leichter vom oder aus dem Material entweichen können und durch das intensive Mischen die Teilchen immer wieder an die Oberfläche kommen bzw. immer wieder ausgetauscht werden und die Gase daher leicht den Behälter verlassen können. Aus diesem Grund verbleiben weniger flüchtige Stoffe im aufzuschmelzenden Material und dadurch gelingt es die Schmelze besser zu entgasen.

Damit ergibt sich bei hoher Qualität der Schmelze und damit des Endprodukts eine bauliche Vereinfachung und Verkürzung der Vorrichtung.

Weitere vorteilhafte Ausgestaltungen der Erfindung werden durch die folgenden Merkmale beschrieben:
Gemäß einer vorteilhaften Ausführungsform der Erfindung ist vorgesehen, dass stromabwärts nach der Einmündung des Kanals in die hintere Kammer und vor der am weitesten stromaufwärts gelegenen Entgasungsöffnung eine Homogenisierungseinheit zur Homogenisierung der filtrierten Schmelze angeschlossen ist. Dabei wird die Schmelze einer intensiven Scherspannung und Dehnspannung unterworfen und stark beschleunigt. Alternativ weist die Schnecke in diesem Bereich eine eine Homogenisierung der Schmelze bewirkende Ganggeometrie auf.

Es ist vorteilhaft, wenn der Schritt der Homogenisierung erst nach der Filtration, jedoch vor der Entgasung der Schmelze erfolgt, da auf diese Weise die Homogenisierung nicht durch allfällige grobe Verunreinigungen oder feste Fremdstoffe bzw. nicht aufgeschmolzene Kunststoffnester beeinträchtigt wird und gleichzeitig die anschließende Entgasung wirksam und effizient vollzogen werden kann, wobei die Gasblasen nahezu vollständig aus der Schmelze entfernt werden können. Auf diese Weise lässt sich ein Endmaterial von hoher Qualität erreichen, das für verschiedene Nachfolgebearbeitungen einsetzbar ist.

In diesem Zusammenhang ist es vorteilhaft, wenn die Homogenisierungseinheit, insbesondere die Schnecke, einen, vorzugsweise stromaufwärts gelegenen, Abschnitt aufweist, mit dem die Schmelze geschert wird und einen weiteren, vorzugsweise stromabwärts davon gelegenen, Abschnitt aufweist, mit dem die Schmelze gemischt wird.

Der Vorgang der Homogenisierung ist ein relativ komplexer Vorgang. Hierbei ist es vorteilhaft, wenn das Material sowohl einer Scherung als auch einer nachfolgenden Mischung unterzogen wird, wobei gleichzeitig eine Temperaturerhöhung der Schmelze sowie eine Durchmischung der gescherten Teile mit den weniger gescherten Teilen erfolgt. Auf diese Weise lässt sich eine gleichmäßige Schmelze mit fein verteilten und sehr kleinen Störsubstanzen erzielen, die im Anschluss daran optimal und wirksam entgast werden kann.

Gemäß einer weiteren vorteilhaften Verfahrensführung ist vorgesehen, dass die Temperatur des Materials bzw. der Schmelze während, zumindest aber am Ende, der Homogenisierung und vor Beginn der Entgasung zumindest gleich hoch wie, vorzugsweise höher als, die Temperaturen bei allen anderen Behandlungsschritten ist.

Eine konstruktiv vorteilhafte Anlage sieht vor, dass der Behälter, der Extruder, die Kammern, der/die Schmelzefilter, die Homogenisierungseinheit, und die Entgasungsöffnung(en) axial hintereinander angeordnet sind bzw. auf einer gemeinsamen Längsachse bzw. um eine gemeinsame Längsachse herum liegen. Dadurch wird die gesamte Vorrichtung sehr schmal und platzsparend.

Eine effektive Möglichkeit der Trennung der Kammern voneinander sieht vor, dass die beiden Kammern durch ein am Umfang der Schnecke vorgesehenes Rückfördergewinde getrennt sind.

In diesem Zusammenhang ist es vorteilhaft, wenn die Ausmündung und die Einmündung des Kanals unmittelbar vor bzw, nach dem Rückfördergewinde aus- bzw. einmünden.

Um die Entgasung zu verbessern, kann die Schnecke zwischen der Einmündung des Kanals in die hintere Kammer und der am weitesten stromaufwärts gelegenen Entgasungsöffnung eine eine, vorzugsweise bis zu den Entgasungsöffnungen reichende, Druckloszone bewirkende Ganggeometrie hat bzw. dekomprimierend ausgestaltet ist.

Gemäß einer vorteilhaften Weiterentwicklung der Erfindung ist vorgesehen, dass der Extruder so am Aufnahmebehälter angeordnet ist, dass das Skalarprodukt aus dem tangential zum Flugkreis des radial äußersten Punktes des Misch- und/oder Zerkleinerungswerkzeugs bzw. zum an der Öffnung vorbeistreichenden Kunststoffmaterial und normal zu einer Radialen des Aufnahmebehälters ausgerichteten, in Dreh- bzw. Bewegungsrichtung des Misch- und/oder Zerkleinerungswerkzeugs weisenden Richtungsvektor (Richtungsvektor der Drehrichtung) und dem Richtungsvektor der Förderrichtung des Extruders in jedem einzelnen Punkt bzw. im gesamten Bereich der Öffnung bzw. in jedem einzelnen Punkt bzw. im gesamten Bereich unmittelbar radial vor der Öffnung, null oder negativ ist. Der Bereich unmittelbar radial vor der Öffnung ist als derjenige Bereich vor der Öffnung definiert, bei dem das Material knapp vor dem Durchtritt durch die Öffnung steht, aber noch nicht die Öffnung passiert hat. Auf diese Weise werden die eingangs erwähnten Vorteile erzielt und werden effektiv jegliche durch Stopfeffekte bewirkte Agglomeratbildungen im Bereich der Einzugsöffnung vermieden. Insbesondere kommt es dabei auch nicht auf die räumliche Anordnung der Mischwerkzeuge und der Schnecke zueinander an, beispielsweise muss die Drehachse nicht normal zur Bodenfläche oder zur Längsachse des Extruders bzw. der Schnecke ausgerichtet sein. Der Richtungsvektor der Drehrichtung und der Richtungsvektor der Förderrichtung liegen in einer, vorzugsweise horizontalen, Ebene, bzw. in einer normal zur Drehachse ausgerichteten Ebene.

Eine weitere vorteilhafte Ausgestaltung ergibt sich dadurch, dass der Richtungsvektor der Drehrichtung des Misch- und/oder Zerkleinerungswerkzeugs mit dem Richtungsvektor der Förderrichtung des Extruders einen Winkel von größer oder gleich 90° und kleiner oder gleich 180° einschließt, wobei der Winkel im Schnittpunkt der beiden Richtungsvektoren am stromaufwärts zur Dreh- bzw. Bewegungsrichtung gelegenen Rand der Öffnung gemessen wird, insbesondere im am weitesten stromaufwärts gelegenen Punkt auf diesem Rand bzw. der Öffnung. Dadurch wird derjenige Winkelbereich beschrieben, in dem der Extruder am Aufnahmebehälter angeordnet werden muss, um die vorteilhaften Effekte zu erzielen. Dabei kommt es im gesamten Bereich der Öffnung bzw. in jedem einzelnen Punkt der Öffnung zu einer zumindest geringfügigen gegensinnigen Ausrichtung der auf das Material einwirkenden Kräfte bzw. im Extremfall zu einer druckneutralen Querausrichtung. In keinem Punkt der Öffnung ist das Skalarprodukt der Richtungsvektoren der Mischwerkzeuge und der Schnecke positiv, nicht einmal in einem Teilbereich der Öffnung tritt somit eine zu große Stopfwirkung auf.

Eine weitere vorteilhafte Ausgestaltung der Erfindung sieht vor, dass der Richtungsvektor der Dreh- bzw. Bewegungsrichtung mit dem Richtungsvektor der Förderrichtung einen Winkel zwischen 170° und 180° einschließt, gemessen im Schnittpunkt der beiden Richtungsvektoren in der Mitte der Öffnung. Eine solche Anordnung trifft beispielsweise zu, wenn der Extruder tangential am Schneidverdichter angeordnet ist.

Um sicherzustellen, dass keine zu große Stopfwirkung auftritt, kann vorteilhafterweise vorgesehen sein, dass der Abstand bzw. die Versetzung der Längsachse zur Radialen größer als oder gleich groß wie der halbe Innendurchmesser des Gehäuses des Extruders bzw. der Schecke ist.

Weiters kann es in diesem Sinne vorteilhaft sein, den Abstand bzw. die Versetzung der Längsachse zur Radialen größer gleich 7 %, noch vorteilhafter größer gleich 20 %, des Radius des Aufnahmebehälters zu bemessen. Bei Extrudern mit einem verlängerten Einzugsbereich bzw. einer Nutenbuchse oder erweiterten Tasche kann es vorteilhaft sein, wenn dieser Abstand bzw. diese Versetzung größer als oder gleich groß wie der Radius des Aufnahmebehälters ist. Insbesondere trifft dies für Fälle zu, bei denen der Extruder tangential an den Aufnahmebehälter angeschlossen ist bzw. tangential zum Querschnitt des Behälters verläuft.

Dabei ist insbesondere vorteilhaft, wenn die Längsachse des Extruders bzw. der Schnecke bzw. die Längsachse der der Einzugsöffnung nächstliegenden Schnecke oder die Innenwandung des Gehäuses oder die Umhüllende der Schecke tangential zur Innenseite der Seitenwand des Behälters verläuft, wobei vorzugsweise die Schnecke an ihrer Stirnseite mit einem Antrieb verbunden ist und an ihrem gegenüberliegenden Stirnende zu einer am Stirnende des Gehäuses angeordneten Austrittsöffnung, insbesondere einem Extruderkopf, fördert.

Bei radial versetzt, jedoch nicht tangential angeordneten, Extrudern ist vorteilhafterweise vorgesehen, dass die gedachte Verlängerung der Längsachse des Extruders entgegen der Förderrichtung den Innenraum des Aufnahmebehälters zumindest abschnittsweise als Sekante durchsetzt.

Es ist vorteilhaft, wenn vorgesehen ist, dass die Öffnung unmittelbar und direkt und ohne längere Beabstandung oder Übergabestrecke, z.B. einer Förderschnecke, mit der Einzugsöffnung verbunden ist. Damit ist eine effektive und schonende Materialübergabe möglich.

Die Umkehr der Drehrichtung der im Behälter umlaufenden Misch- und Zerkleinerungswerkzeuge kann keinesfalls nur willkürlich oder aus Versehen erfolgen, und man kann - weder bei den bekannten Vorrichtungen noch bei der erfindungsgemäßen Vorrichtung - die Mischwerkzeuge nicht ohne Weiteres in Gegenrichtung rotieren lassen, insbesondere deshalb nicht, da die Misch- und Zerkleinerungswerkzeuge in gewisser Weise asymmetrisch bzw. richtungsorientiert so angeordnet sind, dass sie nur auf eine einzige Seite bzw. in eine Richtung wirken. Würde man eine solche Apparatur bewusst in die falsche Richtung drehen, so würde sich weder eine gute Mischtrombe ausbilden, noch würde das Material ausreichend zerkleinert oder erwärmt werden. Jeder Schneidverdichter hat somit seine fix vorgegebene Drehrichtung der Misch- und Zerkleinerungswerkzeuge.

In diesem Zusammenhang ist es besonders vorteilhaft, wenn vorgesehen ist, dass die auf das Kunststoffmaterial einwirkenden in Dreh- bzw. Bewegungsrichtung weisenden vorderen Bereiche bzw. Vorderkanten der Misch- und/oder Zerkleinerungswerkzeuge unterschiedlich ausgebildet, gekrümmt, angestellt bzw. angeordnet sind im Vergleich zu den in Dreh- bzw. Bewegungsrichtung hinteren bzw. nachlaufenden Bereichen.

Eine vorteilhafte Anordnung sieht dabei vor, dass auf dem Misch- und/oder Zerkleinerungswerkzeug Werkzeuge und/oder Messer angeordnet sind, die in Dreh- bzw. Bewegungsrichtung auf das Kunststoffmaterial erwärmend, zerkleinernd und/oder schneidend einwirken. Die Werkzeuge und/oder Messer können entweder direkt an der Welle befestigt sein oder sind vorzugsweise auf einem, insbesondere parallel zur Bodenfläche, angeordneten drehbaren Werkzeugträger bzw. einer Trägerscheibe angeordnet bzw. darin ausgebildet oder daran, gegebenenfalls einstückig, angeformt.

Grundsätzlich sind die erwähnten Effekte nicht nur bei stark komprimierenden aufschmelzenden Extrudern bzw. Agglomeratoren relevant, sondern auch bei weniger komprimierenden Förderschnecken. Auch hier werden lokale Überfütterungen vermieden.

Bei einer weiteren besonders vorteilhaften Ausgestaltung ist vorgesehen, dass der Aufnahmebehälter im wesentlichen zylindrisch mit einer ebenen Bodenfläche und einer dazu vertikal ausgerichteten zylindermantelförmigen Seitenwand ist. Konstruktiv einfach ist es weiters, wenn die Drehachse mit der zentralen Mittelachse des Aufnahmebehälters zusammenfällt. Bei einer weiteren vorteilhaften Ausgestaltung ist vorgesehen, dass die Drehachse oder die zentrale Mittelachse des Behälters vertikal und/oder normal zur Bodenfläche ausgerichtet sind. Durch diese besonderen Geometrien wird das Einzugsverhalten bei einer konstruktiv stabilen und einfach aufgebauten Vorrichtung optimiert.

In diesem Zusammenhang ist es auch vorteilhaft, vorzusehen, dass das Misch- und/oder Zerkleinerungswerkzeug, oder, falls mehrere übereinander angeordnete Misch- und/oder Zerkleinerungswerkzeuge vorgesehen sind, das unterste, bodennächste Misch- und/oder Zerkleinerungswerkzeug, sowie die Öffnung in geringem Abstand zur Bodenfläche, insbesondere im Bereich des untersten Viertels der Höhe des Aufnahmebehälters angeordnet sind. Der Abstand wird dabei definiert und gemessen von der untersten Kante der Öffnung bzw. der Einzugsöffnung bis zum Behälterboden im Randbereich des Behälters. Da die Eckkante meist gerundet ausgebildet ist, wird der Abstand von der untersten Kante der Öffnung entlang der gedachten Verlängerungen der Seitenwand nach unten bis zur gedachten Verlängerung des Behälterbodens nach außen gemessen. Gut geeignete Abstände sind 10 bis 400 mm.

Weiters ist es für die Bearbeitung vorteilhaft, wenn die radial äußersten Kanten der Misch- und/oder Zerkleinerungswerkzeuge bis dicht an die Seitenwand heranreichen.

Der Behälter muss nicht unbedingt eine kreiszylindrische Form aufweisen, wenngleich diese Form aus praktischen und fertigungstechnischen Gründen vorteilhaft ist. Von der Kreiszylinderform abweichende Behälterformen, etwa kegelstumpfförmige Behälter oder zylindrische Behälter mit elliptischem oder ovalem Grundriss, müssen auf einen kreiszylindrischen Behälter gleichen Fassungsvolumens umgerechnet werden, unter der Annahme, dass die Höhe dieses fiktiven Behälters gleich dessen Durchmesser ist. Behälterhöhen, die hierbei die sich einstellende Mischtrombe (unter Berücksichtigung des Sicherheitsabstandes) wesentlich übersteigen, bleiben unberücksichtigt, da diese übermäßige Behäiterhöhe nicht genutzt wird und daher auf die Materialverarbeitung keinen Einfluss mehr hat.

Unter dem Begriff Extruder werden in vorliegendem Text Extruder verstanden, mit denen das Material vollständig aufgeschmolzen wird.

Bei den in den nachfolgenden Figuren beschriebenen Beispielen sind durchwegs komprimierende Einwellen- bzw, Einschneckenextruder dargestellt. Alternativ ist jedoch auch die Vorsehung von Doppel- oder Mehrwellenextrudern, insbesondere mit mehreren identischen Schnecken, die zumindest gleiche Durchmesser d aufweisen, möglich.

Weitere Merkmale und Vorteile der Erfindung ergeben sich aus der Beschreibung der folgenden nicht einschränkend zu verstehenden Ausführungsbeispiele des Erfindungsgegenstandes, welche in den Zeichnungen schematisch und nicht maßstabsgetreu dargestellt sind:
Fig. 1 zeigt einen Vertikalschnitt durch eine erfindungsgemäße Vorrichtung mit etwa tangential angeschlossenem Extruder.
Fig. 2 zeigt einen Horizontalschnitt durch die Ausführungsform von Fig. 1.
Fig. 3 zeigt eine weitere Ausführungsform mit minimaler Versetzung.
Fig. 4 zeigt eine weitere Ausführungsform mit größerer Versetzung.
Fig. 5a, b, c zeigen eine alternative Ausführungsform der Vorrichtung aus verschiedenen Perspektiven

Weder die Behälter, noch die Schnecken oder die Mischwerkzeuge sind in den Zeichnungen maßstäblich, weder als solche, noch im Verhältnis zueinander. So sind z.B. in Wirklichkeit die Behälter meist größer oder die Schnecken länger, als hier dargestellt.

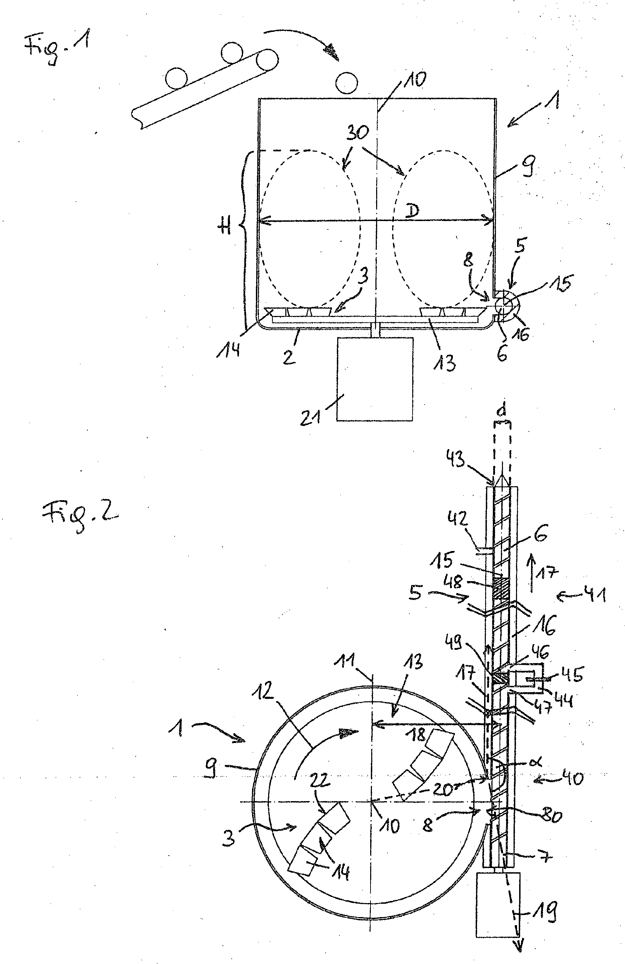

Die in **Fig. 1** und **Fig. 2** dargestellte vorteilhafte Schneidverdichter-Extruder-Kombination zum Aufbereiten bzw. Recyclieren von Kunststoffmaterial weist einen kreiszylindrischen Behälter bzw. Schneidverdichter bzw. Zerreißer 1 mit einer ebenen, horizontalen Bodenfläche 2 und einer normal dazu ausgerichteten, vertikalen, zylindermantelförmigen Seitenwand 9 auf.

In geringem Abstand zur Bodenfläche 2, maximal in etwa 10 bis 20 %, gegebenenfalls weniger, der Höhe der Seitenwand 9 - gemessen von der Bodenfläche 2 zum obersten Rand der Seitenwand 9 - ist eine parallel zur Bodenfläche 2 ausgerichtete, ebene Trägerscheibe bzw. ein Werkzeugträger 13 angeordnet, die/der um eine zentrale Drehachse 10, die gleichzeitig die zentrale Mittelachse des Behälters 1 ist, in die mit einem Pfeil 12 markierte Dreh- bzw. Bewegungsrichtung 12 drehbar ist. Die Trägerscheibe 13 ist über einen Motor 21 angetrieben, der sich unterhalb des Behälters 1 befindet. Auf der Oberseite der Trägerscheibe 13 sind Messer bzw. Werkzeuge, z.B. Schneidmesser, 14 angeordnet, die gemeinsam mit der Trägerscheibe 13 das Misch- und/oder Zerkleinerungswerkzeug 3 bilden.

Wie schematisch angedeutet, sind die Messer 14 auf der Trägerscheibe 13 nicht symmetrisch angeordnet, sondern sind auf ihren in die Dreh- bzw. Bewegungsrichtung 12 weisenden vorderen Kanten 22 besonders ausgebildet, angestellt bzw. angeordnet, um auf das Kunststoffmaterial mechanisch spezifisch einwirken zu können. Die radial äußersten Kanten der Misch- und Zerkleinerungswerkzeuge 3 reichen bis relativ nahe, etwa 5 % des Radius 11 des Behälters 1, an die Innenfläche der Seitenwand 9 heran.

Der Behälter 1 besitzt oben eine Einfüllöffnung, durch die das zu verarbeitende Gut, z.B. Portionen aus Kunststofffolien, z.B. mittels einer Fördereinrichtung in Richtung des Pfeils eingeworfen wird. Alternativ kann vorgesehen sein, dass der Behälter 1 geschlossen und zumindest auf ein technisches Vakuum evakuierbar ist, wobei das Material über ein Schleusensystemen eingebracht wird. Dieses Gut wird von den umlaufenden Misch- und/oder Zerkleinerungswerkzeugen 3 erfasst und in Form einer Mischtrombe 30 hochgewirbelt, wobei das Gut entlang der vertikalen Seitenwand 9 hochsteigt und annähernd im Bereich der wirksamen Behälterhöhe H durch Schwerkrafteinwirkung wieder nach innen und unten in den Bereich der Behältermitte zurückfällt. Die wirksame Höhe H des Behälters 1 ist annähernd gleich seinem Innendurchmesser D. Im Behälter 1 bildet sich also eine Mischtrombe 30 aus, bei der das Material sowohl von oben nach unten als auch in Drehrichtung 12 herumgewirbelt wird. Eine solche Vorrichtung kann somit aufgrund der besonderen Anordnung der Misch- und Zerkleinerungswerkzeuge 3 bzw. der Messer 14 nur mit der vorgegebenen Dreh- bzw. Bewegungsrichtung 12 betrieben werden und die Drehrichtung 12 kann nicht ohne Weiteres oder ohne zusätzliche Änderungen vorzunehmen, umgedreht werden.

Das eingebrachte Kunststoffmaterial wird von den umlaufenden Misch- und Zerkleinerungswerkzeugen 3 zerkleinert, gemischt und dabei über die eingebrachte mechanische Reibungsenergie erwärmt und erweicht, jedoch nicht aufgeschmolzen. Nach einer gewissen Verweilzeit im Behälter 1 wird das homogenisierte, erweichte, teigige aber nicht geschmolzene Material, wie im Folgenden im Detail erörtert wird, durch eine Öffnung 8 aus dem Behälter 1 ausgebracht, in den Einzugsbereich eines Extruders 5 gebracht und dort von einer Schnecke 6 erfasst und in weiterer Folge aufgeschmolzen.

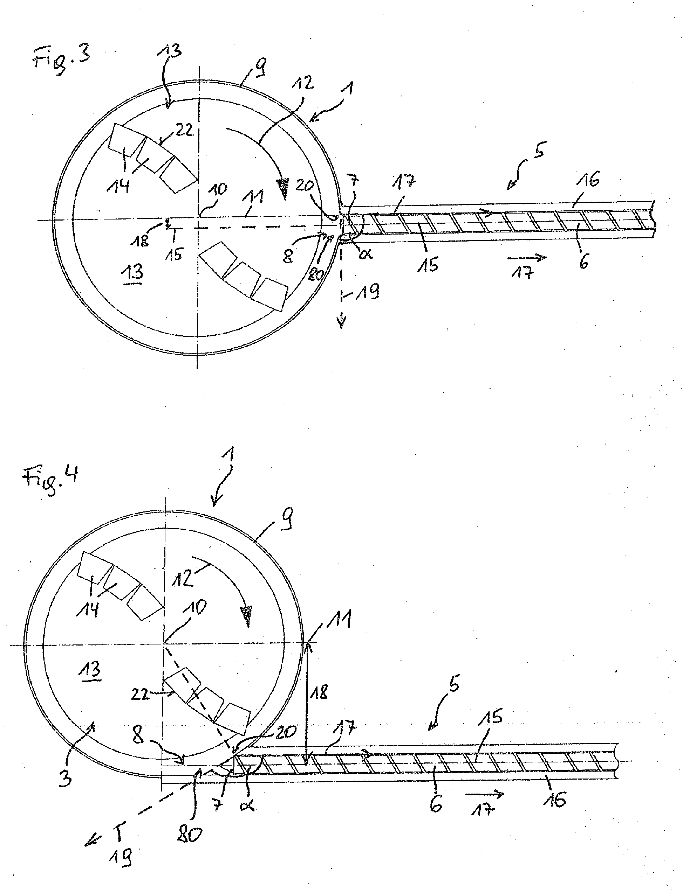

Auf der Höhe des im vorliegenden Fall einzigen Zerkleinerungs- und Mischwerkzeugs 3 ist in der Seitenwand 9 des Behälters 1 die besagte Öffnung 8 ausgebildet, durch die das vorbehandelte Kunststoffmaterial aus dem Inneren des Behälters 1 ausbringbar ist. Das Material wird an einen tangential am Behälter 1 angeordneten Einschnecken-Extruder 5 übergeben, wobei das Gehäuse 16 des Extruders 5 eine in seiner Mantelwand liegende Einzugsöffnung 80 für das von der Schnecke 6 zu erfassende Material aufweist. Eine solche Ausführungsform hat den Vorteil, dass die Schnecke 6 vom in der Zeichnung unteren Stirnende her durch einen nur schematisch dargestellten Antrieb angetrieben werden kann, sodass das in der Zeichnung obere Stirnende der Schnecke 6 vom Antrieb freigehalten werden kann. Dies ermöglicht es, die Austrittsöffnung für das von der Schnecke 6 geförderte, plastifizierte oder agglomerierte Kunststoffmaterial an diesem oberen Stirnende anzuordnen, z.B. in Form eines nicht dargestellten Extruderkopfes. Das Kunststoffmaterial kann daher ohne Umlenkung von der Schnecke 6 durch die Austrittsöffnung gefördert werden, was bei den Ausführungsformen nach den Figuren 3 und 4 nicht ohne weiteres möglich ist.

Die Einzugsöffnung 80 steht mit der Öffnung 8 in Materialförder- bzw. übergabeverbindung und ist im vorliegenden Fall direkt, unmittelbar und ohne längeres Zwischenstück oder Beabstandung mit der Öffnung 8 verbunden. Lediglich ein sehr kurzer Übergabebereich ist vorgesehen.

Im Gehäuse 16 ist eine komprimierende Schnecke 6 um ihre Längsachse 15 drehbar gelagert. Die Längsachse 15 der Schnecke 6 und des Extruders 5 fallen zusammen. Der Extruder 5 fördert das Material in Richtung des Pfeils 17. Der Extruder 5 ist ein an sich bekannter, herkömmlicher Extruder, bei dem das erweichte Kunststoffmaterial komprimiert und dadurch aufgeschmolzen wird, und die Schmelze dann auf der gegenüberliegenden Seite am Extruderkopf austritt.

Die Misch- und/oder Zerkleinerungswerkzeuge 3 bzw. die Messer 14 liegen auf nahezu derselben Höhe bzw. Ebene wie die zentrale Längsachse 15 des Extruders 5. Die äußersten Enden der Messer 14 sind ausreichend von den Stegen der Schnecke 6 beabstandet.

Bei der Ausführungsform gemäß Fig. 1 und 2 ist der Extruder 5, wie erwähnt, tangential an den Behälter 1 angeschlossen bzw. verläuft tangential zu dessen Querschnitt. Die gedachte Verlängerung der zentralen Längsachse 15 des Extruders 5 bzw. der Schnecke 6 entgegen der Förderrichtung 17 des Extruders 5 nach hinten, führt in der Zeichnung neben der Drehachse 10 vorbei, ohne diese zu schneiden. Die Längsachse 15 des Extruders 5 bzw. der Schnecke 6 ist ablaufseitig zu der zur Längsachse 15 parallelen, von der Drehachse 10 des Misch- und/oder Zerkleinerungswerkzeugs 3 in Förderrichtung 17 des Extruders 5 nach außen gerichteten Radialen 11 des Behälters 1 um einen Abstand 18 versetzt. Im vorliegenden Fall durchsetzt die nach hinten gedachte Verlängerung der Längsachse 15 des Extruders 5 den Innenraum des Behälters 1 nicht, sondern läuft knapp daneben vorbei.

Der Abstand 18 ist etwas größer als der Radius des Behälters 1. Der Extruder 5 ist damit geringfügig nach außen versetzt bzw. der Einzugsbereich ist etwas tiefer.

Unter den Begriffen "entgegengerichtet", "gegenläufig" oder "gegensinnig" wird hier jegliche Ausrichtung der Vektoren zueinander verstanden, die nicht spitzwinkelig ist, wie im folgenden im Detail erläutert wird.

Anders ausgedrückt, ist das Skalarprodukt aus einem Richtungsvektor 19 der Drehrichtung 12, der tangential zum Flugkreis des äußersten Punktes des Misch- und/oder Zerkleinerungswerkzeugs 3 bzw. tangential zum an der Öffnung 8 vorbeistreichenden Kunststoffmaterial ausgerichtet ist und der in Dreh- bzw. Bewegungsrichtung 12 der Misch- und/oder Zerkleinerungswerkzeuge 3 weist, und einem Richtungsvektor 17 der Förderrichtung des Extruders 5, der in Förderichtung parallel zur zentralen Längsachse 15 verläuft, in jedem einzelnen Punkt der Öffnung 8 bzw. im Bereich radial unmittelbar vor der Öffnung 8, überall null oder negativ, nirgendwo jedoch positiv.

Bei der Einzugsöffnung in Fig. 1 und 2 ist das Skalarprodukt aus dem Richtungsvektor 19 der Drehrichtung 12 und dem Richtungsvektor 17 der Förderrichtung in jedem Punkt der Öffnung 8 negativ.

Der Winkel α zwischen dem Richtungsvektor 17 der Förderrichtung und dem Richtungsvektor der Drehrichtung 19, gemessen im am weitesten stromaufwärts zur Drehrichtung 12 gelegenen Punkt 20 der Öffnung 8 bzw. am am weitesten stromaufwärts gelegenen Rand der Öffnung 8, beträgt, nahezu maximal, etwa 170°.

Schreitet man entlang der Öffnung 8 in Fig. 2 nach unten, also in Drehrichtung 12, weiter, so wird der stumpfe Winkel zwischen den beiden Richtungsvektoren immer größer. In der Mitte der Öffnung 8 ist der Winkel zwischen den Richtungsvektoren etwa 180° und das Skalarprodukt maximal negativ, weiter unterhalb davon wird der Winkel sogar > 180° und das Skalarprodukt nimmt wieder etwas ab, bleibt aber immer negativ. Diese Winkel sind allerdings nicht mehr als Winkel a bezeichnet, da sie nicht in Punkt 20 gemessen sind.

Ein in Fig. 2 nicht eingezeichneter, in der Mitte bzw. im Zentrum der Öffnung 8 gemessener Winkel β zwischen dem Richtungsvektor der Drehrichtung 19 und dem Richtungsvektor der Förderrichtung 17 beträgt etwa 178° bis 180°.

Die Vorrichtung gemäß Fig. 2 stellt den ersten Grenzfall bzw. Extremwert dar. Bei einer solchen Anordnung ist eine sehr schonende Stopfwirkung bzw. eine besonders vorteilhafte Fütterung möglich und ist eine solche Vorrichtung insbesondere für sensible Materialien, die nahe dem Schmelzbereich bearbeitet werden oder für langstreifiges Gut vorteilhaft.

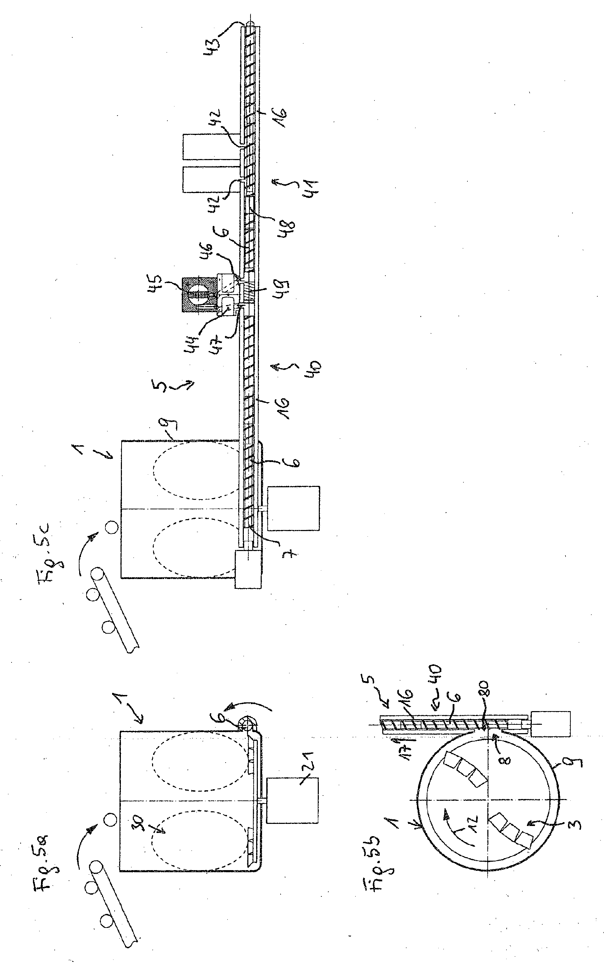

Der Abschnitt, in dem die Aufschmelzung des Materials erfolgt, ist besonders deutlich in Fig. 2 dargestellt. Eine analoge Vorrichtung, in einer seitlichen Schnittansicht, ist auch in Fig. 5c gezeigt.

Das Gehäuse 16, in dem die Schnecke 6 rotiert, ist in zwei voneinander räumlich getrennte, nebeneinanderliegende Kammern 40,41 unterteilt, die durch einen Sperrbauteil 49, beispielsweise ein Rückfördergewinde (Fig. 5), strömungstechnisch voneinander separiert sind. In der weiter stromaufwärts liegenden, dem Behälter 1 nahen, vorderen Kammer 40 liegt der erste Schneckenabschnitt der Schnecke 6 sowie die Einzugsöffnung 80, aus der das Material vom Behälter 1 in die Schnecke 6 eintritt. In der weiter stromabwärts liegenden, hinteren Kammer 41 liegt der zweite Schneckenabschnitt und ist dort zumindest eine Entgasungsöffnung 42 für das Entweichen von Gasen ausgebildet sowie eine endständige Austrittsöffnung 43, aus der die gereinigte und entgaste Schmelze den Extruder 5 verlässt.

Die beiden Kammern 40,41 sind durch wenigstens einen Kanal 44 miteinander strömungstechnisch verbunden. In diesem Kanal 44 ist ein Schmelzefilter 45 angeordnet, durch den die Schmelze hindurchtreten muss. Die Entgasungsöffnung 42 liegt, in Förderrichtung des Extruders 5 gesehen, stromabwärts hinter der Einmündung 46 des Kanals 44 in die hintere Kammer 41 und stromaufwärts vor der Austrittsöffnung 43 angeordnet ist.

Das aus dem Behälter 1 in die Schnecke 6 gelangende Material wird im ersten Schneckenabschnitt bzw. in der vorderen Kammer 40 aufgeschmolzen, tritt dann durch eine Ausmündung 47 in den Kanal 44 ein und wird durch den Schmelzefilter 45 filtriert. Die filtrierte Schmelze tritt dann durch die Einmündung 46 in den zweiten Schneckenabschnitt bzw. in die zweite Kammer 41 ein.

Im Anschluss daran gelangt die Schmelze in eine Homogenisierungseinheit 48. Dabei handelt es sich in der Regel um einen Drehkörper, z.B. eine Schnecke, dessen Design eine gewisse Abfolge von Scherbereichen und Mischbereichen aufweist. Die innige Vermischung zur Homogenisierung des Polymers wird durch komplexe Strömungsverhältnisse im Inneren des Drehkörpers bzw. der Schnecke bzw. den entsprechenden Schneckenabschnitten bewerkstelligt. Neben Axialströmungen in Förderrichtung 17 treten auch Radialströmungen und Axialströmungen gegen die Förderrichtung 17, sogenannte Leckströmungen auf. In den Scherbereichen erfolgt eine Temperaturerhöhung der Schmelze, wobei in den Mischbereichen eine Durchmischung der gescherten Teile mit den weniger gescherten Teilen und dadurch ein gewisser Temperaturausgleich erfolgt. Auf diese Weise werden die Störteilchen zerkleinert, verteilt und wird die Schmelze effektiv homogenisiert und für die Entgasung vorbereitet.

Direkt daran anschließend ist eine Entgasungseinheit vorgesehen, um allfällige Gasblasen und Gaseinschlüsse aus der homogenisierten Schmelze zu entfernen. Das Gas kann durch die Entgasungsöffnungen 42 entweichen.

Nach Passieren dieser Entgasungsöffnungen 42 gelangt das Kunststoffmaterial über eine Austragseinheit, z.B. in Form einer Austragsschnecke mit geringer Scherleistung, zur Austrittsöffnung 43, an die nicht dargestellte Werkzeuge bzw. Nachfolgebearbeitungseinheiten, z.B. Granuliereinrichtungen, angeschlossen sein können.

Zweckmäßig sind die beiden Schneckenabschnitte der Kammern 40,41 in Bohrungen des Gehäuses 16 gelagert, welche Bohrungen relativ zueinander koaxial angeordnet sind und jeweils gleichen Durchmesser aufweisen. Die koaxiale Anordnung der beiden Schneckenabschnitte und des Homogenisators 48 ermöglicht es in einfacher Weise, diese beiden Schneckenabschnitte zu einem einzigen Baukörper mit gemeinsamen Kern zu vereinigen und die beiden Schneckenabschnitte von einer Seite her gemeinsam anzutreiben, also von der in Fig. 2 unteren bzw. der in Fig. 5 linken Seite her. Wird ein Rückfördergewinde 49 verwendet, so liegt dieses außen auf der einzigen Schnecke 6, die sich vom Behälter 1 durchgehend bis zur Austrittsöffnung 43 erstreckt.

Um die Entgasung des bearbeiteten Kunststoffmateriales in der Kammer 41 zu begünstigen, ist im Bereich zwischen der Einmündung 46 und der Entgasungsöffnung 42 eine Druckloszone vorgesehen, die von einem verringerten Kerndurchmesser der Schnecke 6 gebildet ist. Nach der Entgasungsöffnung 42 geht dieser verringerte Kerndurchmesser wieder in den vollen Kerndurchmesser der Austragseinheit über, um das Kunststoffmaterial wieder unter Druck und damit genügend plastifiziert zu halten. Dies ist beispielsweise bei der Vorrichtung gemäß Fig. 5c erkennbar.

In Fig. 2 wurden die kennzeichnenden Längen und Abschnitte der Kammern 40,41 oder der Schnecke 6 nur exemplarisch eingezeichnet. Diese sind, ebenso wie die übrigen in den Figuren gezeigten Merkmale, nur schematisch und nicht maßstabsgetreu oder verhältnismäßig korrekt und wurden teilweise durch Unterbrechungen schematisch gekürzt.

Die Fig. 3 und 4 zeigen Details des Übergangsbereiches vom Schneidverdichter zum Extruder 5 und dienen in erster Linie zur Illustration der Anschlussmöglichkeiten des Extruders 5 hinsichtlich der Drehrichtung.

In Fig. 3 ist eine alternative Ausführungsform gezeigt, bei der der Extruder 5 nicht tangential, sondern mit seiner Stirnseite 7 an den Behälter 1 angeschlossen ist. Die Schnecke 6 und das Gehäuse 16 des Extruders 5 sind im Bereich der Öffnung 8 an die Kontur der Innenwand des Behälters 1 angepasst und bündig zurückversetzt. Kein Teil des Extruders 5 ragt durch die Öffnung 8 hindurch in den Innenraum des Behälters 1 hinein.

Der Abstand 18 entspricht hier etwa 5 bis 10 % des Radius 11 des Behälters 1 und etwa dem halben Innendurchmesser d des Gehäuses 16. Diese Ausführungsfrom stellt somit den zweiten Grenzfall bzw. Extremwert mit kleinstmöglichem Versatz bzw. Abstand 18 dar, bei dem die Dreh- bzw. Bewegungsrichtung 12 der Misch- und/oder Zerkleinerungswerkzeuge 3 der Förderrichtung 17 des Extruders 5 zumindest geringfügig entgegengerichtet ist und zwar über die gesamte Fläche der Öffnung 8.

Das Skalarprodukt ist in Fig. 3 in demjenigen grenzwertigen, am weitesten stromaufwärts gelegenen, Punkt 20 genau null, der am, am weitesten stromaufwärts gelegenen, Rand der Öffnung 8 liegt. Der Winkel α zwischen dem Richtungsvektor 17 der Förderrichtung und dem Richtungsvektor der Drehrichtung 19 ist, gemessen in Punkt 20 von Fig. 3, genau 90°. Schreitet man entlang der Öffnung 8 nach unten, also in Drehrichtung 12, weiter, so wird der Winkel zwischen den Richtungsvektoren immer größer und zu einem stumpfen Winkel > 90° und das Skalarprodukt wird gleichzeitig negativ. An keinem Punkt oder in keinem Bereich der Öffnung 8 ist das Skalaprodukt jedoch positiv oder der Winkel kleiner als 90°. Dadurch kann nicht einmal in einem Teilbereich der Öffnung 8 eine lokale Überfütterung erfolgen bzw. kann es in keinem Bereich der Öffnung 8 zu einer schädlichen überhöhten Stopfwirkung kommen.

Darin besteht auch ein entscheidender Unterschied zu einer rein radialen Anordnung, da in Punkt 20 bzw, an der Kante 20' bei einer voll radialen Anordnung des Extruders 5 ein Winkel α < 90° vorliegen würde und diejenigen Bereiche der Öffnung 8, die in der Zeichnung oberhalb der Radialen 11 bzw. stromaufwärts bzw. zulaufseitig davon gelegen sind, hätten ein positives Skalarprodukt. Damit könnte sich in diesen Bereichen lokal aufgeschmolzenes Kunststoffgut ansammeln.

In **Fig. 4** ist eine weitere alternative Ausführungsform dargestellt, bei der der Extruder 5 ablaufseitig etwas weiter versetzt ist als bei Fig. 3, jedoch noch nicht tangential wie in Fig. 1 und 2. Im vorliegenden Fall, wie auch bei Fig. 3, durchsetzt die nach hinten gedachte Verlängerung der Längsachse 15 des Extruders 5 den Innenraum des Behälters 1 sekantenartig. Dies hat zur Folge, dass - gemessen in Umfangsrichtung des Behälters 1 - die Öffnung 8 breiter ist als bei der Ausführungsform nach Fig. 3. Auch der Abstand 18 ist entsprechend größer als bei Fig. 3, jedoch etwas kleiner als der Radius 11. Der Winkel α gemessen in Punkt 20 beträgt etwa 150°, wodurch gegenüber der Vorrichtung von Fig. 3 die Stopfwirkung verringert wird, was für gewisse sensible Polymere vorteilhafter ist. Der vom Behälter 1 aus gesehene rechte innere Rand bzw. die Innenwandung des Gehäuses 16 schließt tangential an den Behälter 1 an, wodurch im Unterschied zu Fig. 3. keine stumpfe Übergangskante ausgebildet ist. In diesem stromabwärtigsten Punkt der Öffnung 8, in Fig. 4 ganz links, ist der Winkel etwa 180°.

In den **Fig. 5a****, b** und **c** ist eine zu Fig. 2 sehr ähnliche Vorrichtung aus verschiedenen Perspektiven - in einer Schnittansicht von der Seite (Fig. 5a), einer Schnittansicht von oben (Fig. 5b) und einer Schnittansicht von der Seite um 90° gedreht (Fig. 5c) - dargestellt. Hierzu gelten die Ausführungen zu Fig. 2 analog.

## Patentansprüche

1. Vorrichtung zum Vorbehandeln und anschließenden Plastifizieren von Kunststoffen, insbesondere von thermoplastischem Abfallkunststoff zu Recyclingzwecken, mit einem Behälter (1) für das zu verarbeitende Material, wobei im Behälter (1) zumindest ein um eine Drehachse (10) drehbares umlaufendes Misch- und/oder Zerkleinerungswerkzeug (3) zur Mischung, Erwärmung und gegebenenfalls Zerkleinerung des Kunststoffmaterials angeordnet ist,
wobei in einer Seitenwand (9) des Behälters (1) im Bereich der Höhe des oder des untersten, bodennächsten Misch- und/oder Zerkleinerungswerkzeugs (3) eine Öffnung (8) ausgebildet ist, durch die das vorbehandelte Kunststoffmaterial aus dem Inneren des Behälters (1) ausbringbar ist,
wobei zumindest ein Extruder bzw. Verdichter (5) zur Aufnahme des vorbehandelten Materials vorgesehen ist, mit zumindest einer in einem Gehäuse (16) rotierenden, plastifizierenden Schnecke (6), wobei das Gehäuse (16) eine an seiner Stirnseite (7) oder in seiner Mantelwand liegende Einzugsöffnung (80) für das von der Schnecke (6) zu erfassende Material aufweist, und die Einzugsöffnung (80) mit der Öffnung (8) in Verbindung steht,
wobei das Gehäuse (16) in zwei voneinander räumlich getrennte Kammern (40,41) unterteilt ist oder zwei voneinander räumlich getrennte Kammern (40,41) vorliegen von denen die weiter stromaufwärts liegende, vordere Kammer (40) die Einzugsöffnung (80) und die weiter stromabwärts liegende, hintere Kammer (41) zumindest eine Entgasungsöffnung (42) für das Entweichen von Gasen aufweist, sowie eine Austrittsöffnung (43) für die gereinigte und entgaste Schmelze,
wobei die beiden Kammern (40,41) durch wenigstens einen Kanal (44) miteinander verbunden sind, in dem zumindest ein Schmelzefilter (45) angeordnet ist, durch den die Schmelze hindurchtritt,
und wobei jede Entgasungsöffnung (42), in Förderrichtung des Extruders (5) gesehen, stromabwärts hinter der Einmündung (46) jedes Kanals (44) in die hintere Kammer (41) und stromaufwärts vor der Austrittsöffnung (43) angeordnet ist, wobei
die gedachte Verlängerung der zentralen Längsachse (15) des Extruders (5) oder der der Einzugsöffnung (80) nächstliegenden Schnecke (6) entgegen der Förderrichtung (17) des Extruders (5) an der Drehachse (10) ohne diese zu schneiden vorbeiführt, **dadurch gekennzeichnet, dass** die Längsachse (15) des Extruders (5) oder der der Einzugsöffnung (80) nächstliegenden Schnecke (6) ablaufseitig und in Dreh- bzw. Bewegungsrichtung (12) des Misch- und/oder Zerkleinerungswerkzeugs (3) zu der zur Längsachse (15) parallelen, von der Drehachse (10) des Misch- und/oder Zerkleinerungswerkzeugs (3) in Förderrichtung (17) des Extruders (5) nach außen gerichteten Radialen (11) des Behälters (1) um einen Abstand (18) versetzt ist,
und dass die Länge (L) der Schnecke (6) in der vorderen Kammer (40), gemessen ab dem in Förderrichtung der Schnecke (6) stromabwärts gelegenen Rand (20') der Einzugsöffnung (80), bis zur im Gehäuse (16) ausgebildeten Ausmündung (47) des am weitesten stromaufwärts gelegenen zum Schmelzefilter (45) führenden Kanals (44), in einem Bereich des 10- bis 40-fachen, vorzugsweise 15- bis 30-fachen, des Nenndurchmessers (d) der Schnecke (6) liegt,
und dass der Abstand von der Einmündung (46) des Kanals (44) in die hintere Kammer (41) zu der am weitesten stromaufwärts gelegenen Entgasungsöffnung (42) in einem Bereich zwischen dem 1,5- bis 15-fachen, vorzugsweise 3- bis 12-fachen, des Nenndurchmessers (d) der Schnecke (6) liegt.

2. Vorrichtung nach Anspruch 1, **dadurch gekennzeichnet, dass** stromabwärts nach der Einmündung (46) des Kanals (44) in die hintere Kammer (41) und vor der am weitesten stromaufwärts gelegenen Entgasungsöffnung (42) eine Homogenisierungseinheit (48) zur Homogenisierung der filtrierten Schmelze angeschlossen ist oder dass die Schnecke (6) in diesem Bereich eine eine Homogenisierung der Schmelze bewirkende Ganggeometrie aufweist, wobei die Schmelze vorzugsweise einer intensiven Scherspannung und Dehnspannung unterworfen und stark beschleunigt wird.

3. Vorrichtung nach Anspruch 2, **dadurch gekennzeichnet, dass** die Homogenisierungseinheit (48), insbesondere die Schnecke (6), einen, vorzugsweise stromaufwärts gelegenen, Abschnitt aufweist, mit dem die Schmelze geschert wird und einen weiteren, vorzugsweise stromabwärts davon gelegenen, Abschnitt aufweist, mit dem die Schmelze gemischt wird.

4. Anordnung nach einem der Ansprüche 1 bis 3, **dadurch gekennzeichnet, dass** der Behälter (1), der Extruder (5), die Kammern (40,41), der/die Schmelzefilter (45), die Homogenisierungseinheit (48), und die Entgasungsöffnung(en) (42) axial hintereinander angeordnet sind bzw. auf einer gemeinsamen Längsachse (15) bzw. um eine gemeinsame Längsachse (15) herum liegen.

5. Vorrichtung nach einem der Ansprüche 1 bis 4, **dadurch gekennzeichnet, dass** die beiden Kammern (40,41) durch ein am Umfang der Schnecke (6) vorgesehenes Rückfördergewinde (49) getrennt sind,
und dass gegebenenfalls
die Ausmündung (47) und die Einmündung (46) des Kanals (44) unmittelbar vor bzw. nach dem Rückfördergewinde (49) aus- bzw. einmünden.

6. Vorrichtung nach einem der Ansprüche 1 bis 5, **dadurch gekennzeichnet, dass** die Schnecke (6) zwischen der Einmündung (46) des Kanals (44) in die hintere Kammer (41) und der am weitesten stromaufwärts gelegenen Entgasungsöffnung (42) eine eine, vorzugsweise bis zu den Entgasungsöffnungen (42) reichende, Druckloszone bewirkende Ganggeometrie hat bzw. dekomprimierend ausgestaltet ist.

7. Vorrichtung nach einem der Ansprüche 1 bis 6, **dadurch gekennzeichnet, dass** für einen mit dem Behälter (1) in Verbindung stehenden Extruder (5) das Skalarprodukt gebildet aus dem tangential zum Flugkreis des radial äußersten Punktes des Misch- und/oder Zerkleinerungswerkzeugs (3) bzw. tangential zu dem an der Öffnung (8) vorbeibewegten Kunststoffmaterial und normal zu einer Radialen (11) des Behälters (1) ausgerichteten, in Dreh- bzw. Bewegungsrichtung (12) des Misch- und/oder Zerkleinerungswerkzeugs (3) weisenden Richtungsvektor der Drehrichtung (19) und dem Richtungsvektor (17) der Förderrichtung des Extruders (5) in jedem einzelnen Punkt bzw. im gesamten Bereich der Öffnung (8) bzw. unmittelbar radial vor der Öffnung (8) null oder negativ ist.

8. Vorrichtung nach einem der Ansprüche 1 bis 7, **dadurch gekennzeichnet, dass** der Richtungsvektor der Drehrichtung (19) des radial äußersten Punktes des Misch- und/oder Zerkleinerungswerkzeugs (3) und der Richtungsvektor (17) der Förderrichtung des Extruders (5) einen Winkel (α) von größer oder gleich 90° und kleiner oder gleich 180° einschließen, gemessen im Schnittpunkt der beiden Richtungsvektoren (17,19) am bezüglich der Dreh- bzw. Bewegungsrichtung (12) des Misch- und/oder Zerkleinerungswerkzeugs (3) stromaufwärts gelegenen, zulaufseitigen Rand der Öffnung (8), insbesondere im am weitesten stromaufwärts gelegenen Punkt (20) auf diesem Rand bzw. der Öffnung (8).

9. Vorrichtung nach einem der Ansprüche 1 bis 8, **dadurch gekennzeichnet, dass** der Richtungsvektor (19) der Dreh- bzw. Bewegungsrichtung (12) und der Richtungsvektor (17) der Förderrichtung des Extruders (5) einen Winkel (β) zwischen 170° und 180° einschließen, gemessen im Schnittpunkt der beiden Richtungsvektoren (17,19) in der Mitte der Öffnung (8).

10. Vorrichtung nach einem der Ansprüche 1 bis 9, **dadurch gekennzeichnet, dass** der Abstand (18) größer als oder gleich groß wie der halbe Innendurchmesser des Gehäuses (16) des Extruders (5) bzw. der Schnecke (6) ist, und/oder größer gleich 7 %, vorzugsweise größer gleich 20 %, des Radius des Behälters (1) ist oder dass der Abstand (18) größer als oder gleich groß wie der Radius des Behälters (1) ist,
oder
dass die gedachte Verlängerung der Längsachse (15) des Extruders (5) entgegen der Förderrichtung nach Art einer Sekante zum Querschnitt des Behälters (1) angeordnet ist und den Innenraum des Behälters (1) zumindest abschnittsweise durchsetzt,
oder
dass der Extruder (5) tangential an den Behälter (1) angeschlossen ist bzw. tangential zum Querschnitt des Behälters (1) verläuft bzw. dass die Längsachse (15) des Extruders (5) bzw. der Schnecke (6) bzw. die Längsachse der der Einzugsöffnung (80) nächstliegenden Schnecke (6) oder die Innenwandung des Gehäuses (16) oder die Umhüllende der Schecke (6) tangential zur Innenseite der Seitenwand (9) des Behälters (1) verläuft, wobei vorzugsweise die Schnecke (6) an ihrer Stirnseite (7) mit einem Antrieb verbunden ist und an ihrem gegenüberliegenden Stirnende zu einer am Stirnende des Gehäuses (16) angeordneten Austrittsöffnung, insbesondere einem Extruderkopf, fördert.

11. Vorrichtung nach einem der Ansprüche 1 bis 10, **dadurch gekennzeichnet, dass** die Öffnung (8) unmittelbar und direkt und ohne wesentliche Beabstandung, insbesondere ohne Übergabestrecke oder Förderschnecke, mit der Einzugsöffnung (80) verbunden ist.

12. Vorrichtung nach einem der Ansprüche 1 bis 11, **dadurch gekennzeichnet, dass** das Misch- und/oder Zerkleinerungswerkzeug (3) Werkzeuge und/oder Messer (14) umfasst, die in Dreh- bzw. Bewegungsrichtung (12) auf das Kunststoffmaterial zerkleinernd, schneidend und erwärmend einwirken, wobei die Werkzeuge und/oder Messer (14) vorzugsweise auf oder an einem, insbesondere parallel zur Bodenfläche (2), angeordneten, drehbaren Werkzeugträger (13), insbesondere einer Trägerscheibe (13), ausgebildet oder angeordnet sind,
und/oder
dass die auf das Kunststoffmaterial einwirkenden in Dreh- bzw. Bewegungsrichtung (12) weisenden vorderen Bereiche bzw. Vorderkanten (22) der Misch- und/oder Zerkleinerungswerkzeuge (3) oder der Messer (14) unterschiedlich ausgebildet, angestellt, gekrümmt und/oder angeordnet sind im Vergleich zu den in Dreh- bzw. Bewegungsrichtung (12) hinteren bzw. nachlaufenden Bereichen.

13. Vorrichtung nach einem der Ansprüche 1 bis 12, **dadurch gekennzeichnet, dass** der Behälter (1) im wesentlichen kreiszylindrisch mit einer ebenen Bodenfläche (2) und einer dazu vertikal ausgerichteten zylindermantelförmigen Seitenwand (9) ausgebildet ist und/oder die Drehachse (10) der Misch- und/oder Zerkleinerungswerkzeuge (3) mit der zentralen Mittelachse des Behälters (1) zusammenfällt und/oder die Drehachse (10) oder die zentrale Mittelachse vertikal und/oder normal zur Bodenfläche (2) ausgerichtet sind.

14. Vorrichtung nach einem der Ansprüche 1 bis 13, **dadurch gekennzeichnet, dass** der unterste Werkzeugträger (13) bzw. das unterste der Misch- und/oder Zerkleinerungswerkzeuge (3) und/oder die Öffnung (8) bodennah in geringem Abstand zur Bodenfläche (2), insbesondere im Bereich des untersten Viertels der Höhe des Behälters (1), vorzugsweise in einem Abstand zur Bodenfläche (2) von 10 mm bis 400 mm angeordnet sind.

15. Vorrichtung nach einem der Ansprüche 1 bis 14, **dadurch gekennzeichnet, dass** der Extruder (5) ein Einzelschneckenextruder (6) mit einer einzigen komprimierenden Schnecke (6) ist oder ein Doppel- oder Mehrfachschneckenextruder ist, wobei die Durchmesser d der einzelnen Schnecken (6) untereinander gleich groß sind.

## Claims

1. Apparatus for the pretreatment and subsequent plastification of plastics, in particular of thermoplastics waste for recycling purposes, with a container (1) for the material to be processed, where the arrangement has, in the container (1), at least one mixing and/or comminution implement (3) which is rotatable around an axis (10) of rotation and which is intended for the mixing, heating and optionally comminution of the plastics material,
where an aperture (8) through which the pretreated plastics material can be removed from the interior of the container (1) is formed in a side wall (9) of the container (1) in the region of the level of the, or of the lowest, mixing and/or comminution implement (3) that is closest to the base,
where at least one extruder or compactor (5) is provided to receive the pretreated material, and has at least one screw (6) which rotates in a housing (16) and which has plastifying action, where the housing (16) has, located at its end (7) or in its jacket wall, an intake aperture (80) for the material to be received by the screw (6), and there is connection between the intake aperture (80) and the aperture (8), where the housing (16) is divided into two spatially separate chambers (40, 41), or there are two spatially separate chambers (40, 41), of which the frontal chamber (40), lying further upstream, has the intake aperture (80), and the rearward chamber (41), lying further downstream, has at least one degassing aperture (42) for the escape of gases, and also an exit aperture (43) for the cleaned and degassed melt,
where the two chambers (40, 41) are connected with one another through at least one channel (44) in which there is at least one melt filter (45) through which the melt passes,
and where each degassing aperture (42), viewed in the direction of conveying of the extruder (5), is sited downstream, after the inlet opening (46) of each channel (44) into the rearward chamber (41), and upstream, before the exit aperture (43), where the imaginary continuation of the central longitudinal axis (15) of the extruder (5) or of the screw (6) closest to the intake aperture (80), in a direction opposite to the direction (17) of conveying of the extruder (5), passes, and does not intersect, the axis (10) of rotation, **characterized in that**, on the outflow side or in the direction (12) of rotation or of movement of the mixing and/or comminution implement (3), an offset distance (18) between the longitudinal axis (15) of the extruder (5) or of the screw (6) closest to the intake aperture (80), and the radius (11) of the container (1) that is parallel to the longitudinal axis (15) and that proceeds outwards from the axis (10) of rotation of the mixing and/or comminution implement (3) in the direction (17) of conveying of the extruder (5),
and **in that** the length (L) of the screw (6) in the frontal chamber (40), measured from the intake aperture (80) edge (20') situated downstream in the direction of conveying of the screw (6), to the outlet opening (47), formed in the housing (16), of the channel (44) which is situated furthest upstream and which leads to the melt filter (45), is in a range from 10 to 40 times, preferably 15 to 30 times, the nominal diameter (d) of the screw (6),
and **in that** the distance from the opening (46) of the channel (44) into the rearward chamber (41) to the degassing aperture (42) situated furthest upstream is in a range from 1.5 to 15 times, preferably 3 to 12 times, the nominal diameter (d) of the screw (6).

2. Apparatus according to Claim 1, **characterized in that** downstream, after the opening (46) of the channel (44) into the rearward chamber (41) and before the degassing aperture (42) situated furthest upstream, there is a homogenizing unit (48) connected for homogenizing the filtered melt, or **in that** in this region the screw (6) has a flight geometry which brings about homogenization of the melt, the melt preferably being subjected to intense shearing stress and stretching stress and being highly accelerated.

3. Apparatus according to either of Claims 1 and 2, **characterized in that** the homogenizing unit (48), more particularly the screw (6), has a section which is preferably situated upstream and with which the melt is subjected to shearing, and has a further section, preferably situated downstream thereof, with which the melt is mixed.

4. Arrangement according to any of Claims 1 to 3, **characterized in that** the container (1), the extruder (5), the chambers (40, 41), the melt filter or filters (45), the homogenizing unit (48) and the degassing aperture or apertures (42) are disposed axially in series or lie on a common longitudinal axis (15) or lie around a common longitudinal axis (15).

5. Apparatus according to any of Claims 1 to 4, **characterized in that** the two chambers (40, 41) are separated by a back-conveying thread (49) provided on the periphery of the screw (6) and that if applicable the outlet opening (47) and the inlet opening (46) of the channel (44) open out and in, respectively, immediately before and after the back-conveying thread (49), respectively.

6. Apparatus according to any of Claims 1 to 5, **characterized in that** between the inlet opening (46) of the channel (44) into the rearward chamber (41) and the degassing aperture (42) that is situated furthest upstream, the screw is designed with a decompressing action or has a flight geometry which produces an unpressurized zone extending preferably up to the degassing apertures (42).

7. Apparatus according to any of Claims 1 to 6, **characterized in that**, for an extruder (5) in connection with the container (1), the scalar product of the direction vector that is associated with the direction (19) of rotation and that is tangential to the circle described by the radially outermost point of the mixing and/or comminution implement (3) or that is tangential to the plastics material transported past the aperture (8) and that is normal to a radius (11) of the container (1), and that points in the direction (12) of rotation or of movement of the mixing and/or comminution implement (3), and of the direction vector (17) that is associated with the direction of conveying of the extruder (5) at each individual point or in the entire region of the aperture (8) or immediately radially in front of the aperture (8) is zero or negative.

8. Apparatus according to any of Claims 1 to 7, **characterized in that** the angle (α) included between the direction vector that is associated with the direction (19) of rotation of the radially outermost point of the mixing and/or comminution implement (3) and the direction vector (17) that is associated with the direction of conveying of the extruder (5) is greater than or equal to 90° and smaller than or equal to 180°, measured at the point of intersection of the two direction vectors (17, 19) at the inflow-side edge that is associated with the aperture (8) and that is situated upstream in relation to the direction (12) of rotation or of movement of the mixing and/or comminution implement (3), in particular at the point (20) that is on the said edge or on the aperture (8) and is situated furthest upstream.

9. Apparatus according to any of Claims 1 to 8, **characterized in that** the angle (β) included between the direction vector (19) that is associated with the direction (12) of rotation or of movement and the direction vector (17) that is associated with the direction of conveying of the extruder (5) is from 170° to 180°, measured at the point of intersection of the two direction vectors (17, 19) in the middle of the aperture (8).

10. Apparatus according to any of Claims 1 to 9, **characterized in that** the distance (18) is greater than or equal to half of the internal diameter of the housing (16) of the extruder (5) or of the screw (6), and/or greater than or equal to 7%, preferably greater than or equal to 20%, of the radius of the container (1), or **in that** the distance (18) is greater than or equal to the radius of the container (1) or that the imaginary continuation of the longitudinal axis (15) of the extruder (5) in a direction opposite to the direction of conveying is arranged in the manner of a secant in relation to the cross section of the container (1), and, at least in sections, passes through the space within the container (1) or that the extruder (5) is attached tangentially to the container (1) or runs tangentially in relation to the cross section of the container (1), or **in that** the longitudinal axis (15) of the extruder (5) or of the screw (6) or the longitudinal axis of the screw (6) closest to the intake aperture (80) runs tangentially with respect to the inner side of the side wall (9) of the container (1), or the inner wall of the housing (16) does so, or the enveloping end of the screw (6) does so, where it is preferable that there is a drive connected to the end (7) of the screw (6), and that the screw provides conveying, at its opposite end, to a discharge aperture, in particular an extruder head arranged at the end of the housing (16).

11. Apparatus according to any of Claims 1 to 10, **characterized in that** there is immediate and direct connection between the aperture (8) and the intake aperture (80), without substantial separation, in particular without transfer section or conveying screw.

12. Apparatus according to any of Claims 1 to 11, **characterized in that** the mixing and/or comminution implement (3) comprises implements and/or blades (14) which, in the direction (12) of rotation or of movement, have a comminuting, cutting and heating effect on the plastics material, where the implements and/or blades (14) are preferably arranged or formed on or at a rotatable implement carrier (13) which is in particular a carrier disc (13) and which is in particular arranged parallel to the basal surface (2) and/or that the manner of formation, set-up, curvature and/or arrangement of the frontal regions or frontal edges (22) that are associated with the mixing and/or comminution implements (3) or with the blades (14), act on the plastics material and point in the direction (12) of rotation or of movement, differs when comparison is made with the regions that, in the direction (12) of rotation or of movement, are at the rear or behind.

13. Apparatus according to any of Claims 1 to 12, **characterized in that** the container (1) is in essence cylindrical with circular cross section and with a level basal surface (2) and with, orientated vertically in relation thereto, a side wall (9) which has the shape of the jacket of a cylinder, and/or the axis (10) of rotation of the mixing and/or comminution implements (3) coincides with the central axis of the container (1), and/or the axis (10) of rotation or the central axis are orientated vertically and/or normally in relation to the basal surface (2).

14. Apparatus according to any of Claims 1 to 13, **characterized in that** the lowest implement carrier (13) or the lowest of the mixing and/or comminution implements (3) and/or the aperture (8) are arranged close to the base at a small distance from the basal surface (2), in particular in the region of the lowest quarter of the height of the container (1), preferably at a distance of from 10 mm to 400 mm from the basal surface (2).

15. Apparatus according to any of Claims 1 to 14, **characterized in that** the extruder (5) is a single-screw extruder (6) with a single compression screw (6), or is a twin- or multiscrew extruder, where the diameters d of the individual screws (6) are all identical.

## Revendications

1. Dispositif permettant le prétraitement et, ensuite, la plastification de matières plastiques, en particulier des déchets de matières thermoplastiques à des fins de recyclage, comportant un conteneur (1) pour le matériau à traiter, au moins un outil de brassage et/ou outil de concassage (3), apte à tourner autour d'un axe de rotation (10) et destiné à brasser, chauffer et, le cas échéant, à concasser la matière plastique, étant disposé dans le conteneur (1),
une ouverture (8), à travers laquelle la matière plastique prétraitée peut être évacuée hors de l'intérieur du conteneur (1), étant réalisée dans une paroi latérale (9) du conteneur (1), dans la zone à la hauteur de l'outil de brassage ou outil de concassage (3) le plus bas, le plus près du fond,
au moins une extrudeuse ou un compacteur (5) étant prévu pour recevoir le matériau prétraité, comportant au moins une vis transporteuse (6) tournant dans un carter (16) et destinée à plastifier, le carter (16) comportant une ouverture d'admission (80), située sur sa face frontale (7) ou dans sa paroi latérale, pour le matériau à saisir par la vis transporteuse (6), et ladite ouverture d'admission (80) communiquant avec l'ouverture (8),
le carter (16) étant divisé en deux chambres (40, 41) séparées l'une de l'autre dans l'espace, parmi lesquelles la chambre antérieure (40), située plus en amont, comportant l'ouverture d'admission (80), et la chambre postérieure (41), située plus en aval, comportant au moins une ouverture de dégazage (42) pour l'échappement des gaz, ainsi qu'une ouverture de sortie (43) pour la matière en fusion nettoyée et dégazée,
les deux chambres (40, 41) étant reliées l'une à l'autre par au moins un canal (44), dans lequel est disposé au moins un filtre de matière en fusion (45), à travers lequel passe la matière en fusion,
et chaque ouverture de dégazage (42), considérée dans le sens de transport de l'extrudeuse (5), étant disposée en aval après l'entrée (46) de chaque canal (45) débouchant dans la chambre postérieure (41) et en amont avant l'ouverture de sortie (43),
le prolongement imaginaire de l'axe longitudinal (15) central de l'extrudeuse (5) ou de la vis transporteuse (6) la plus proche de l'ouverture d'admission (80) passant devant l'axe de rotation (10) sans croiser celui-ci, dans le sens opposé au sens de transport (17) de l'extrudeuse (5),
**caractérisé en ce que**
l'axe longitudinal (15) de l'extrudeuse (5) ou de la vis transporteuse (6) la plus proche de l'ouverture d'admission (80) est décalé selon une distance (18) du côté sortie et dans le sens de rotation ou de mouvement (12) de l'outil de brassage et/ou outil de concassage (3) par rapport à la radiale (11) du conteneur (1), parallèle à l'axe longitudinal (15) et orientée vers l'extérieur à partir de l'axe de rotation (10) de l'outil de brassage et/ou outil de concassage (3) dans le sens de transport (17) de l'extrudeuse (5),
et **en ce que** la longueur (L) de la vis transporteuse (6) dans la chambre antérieure (40), mesurée à partir du bord (20') de l'ouverture d'admission (80), situé en aval dans le sens de transport de la vis transporteuse (6), jusqu'à la sortie (47), réalisée dans le carter (16), du canal (44) situé le plus en aval et menant vers le filtre (45), se situe dans une plage de 10 à 40 fois, de préférence 15 à 30 fois le diamètre nominal (d) de la vis transporteuse (6),
et **en ce que** la distance entre l'entrée (46) du canal (44) débouchant dans la chambre postérieure (41) et l'ouverture de dégazage (42) située le plus en amont se situe dans une plage entre 1,5 à 15 fois, de préférence 3 à 12 fois le diamètre nominal (d) de la vis transporteuse (6).

2. Dispositif selon la revendication 1, **caractérisé en ce qu'**en aval après l'entrée (46) du canal (44) débouchant dans la chambre postérieure (41) et avant l'ouverture de dégazage (42) située le plus en amont, est raccordée une unité d'homogénéisation (48) destinée à homogénéiser la matière en fusion filtrée, ou **en ce que** la vis transporteuse (6) possède dans cette zone une géométrie de spire induisant une homogénéisation de la matière en fusion, la matière en fusion étant soumise de préférence à une intense contrainte de cisaillement et à une contrainte d'allongement et étant fortement accélérée.

3. Dispositif selon la revendication 2, **caractérisé en ce que** l'unité d'homogénéisation (48), en particulier la vis transporteuse (6), comporte un tronçon situé de préférence en amont, par lequel la matière en fusion est cisaillée, et un autre tronçon situé de préférence en aval de ce dernier, par lequel la matière en fusion est brassée.

4. Dispositif selon l'une quelconque des revendications 1 à 3, **caractérisé en ce que** le conteneur (1), l'extrudeuse (5), les chambres (40, 41), le/les filtre(s) (45), l'unité d'homogénéisation (48) et la/les ouverture(s) de dégazage (42) sont disposés axialement les uns derrière les autres ou sont disposés sur un axe longitudinal (15) commun ou autour d'un axe longitudinal (15) commun.

5. Dispositif selon l'une quelconque des revendications 1 à 4, **caractérisé en ce que** les deux chambres (40, 41) sont séparées par un filetage de renvoi (49) prévu sur la périphérie de la vis transporteuse (6),
et **en ce que**, le cas échéant, la sortie (47) et l'entrée (46) du canal (44) débouchent directement avant ou après le filetage de renvoi (49).

6. Dispositif selon l'une quelconque des revendications 1 à 5, **caractérisé en ce que** la vis transporteuse (6) entre l'entrée (46) du canal (44) débouchant dans la chambre postérieure (41) et l'ouverture de dégazage (42), située le plus en amont, a une géométrie de spire s'avançant jusqu'aux ouvertures de dégazage (42) agissant comme une zone sans pression ou est configurée de manière à décomprimer.

7. Dispositif selon l'une quelconque des revendications 1 à 6, **caractérisé en ce que** pour une extrudeuse (5) communiquant avec le conteneur (1), le produit scalaire, formé à partir du vecteur de direction du sens de rotation (19), orienté tangentiellement au cercle de rotation du point radialement le plus extérieur de l'outil de brassage et/ou outil de concassage (3) ou tangentiellement à la matière plastique déplacée au niveau de l'ouverture (8) et normalement à une radiale (11) du conteneur (1), et dirigé dans le sens de rotation ou de mouvement (12) de l'outil de brassage et/ou outil de concassage (3), et du vecteur de direction (17) du sens de transport de l'extrudeuse (5) dans chaque point individuel ou dans toute la zone de l'ouverture (8) ou directement radialement devant l'ouverture (8), est nul ou négatif.

8. Dispositif selon l'une quelconque des revendications 1 à 7, **caractérisé en ce que** le vecteur de direction du sens de rotation (19) du point radialement le plus extérieur de l'outil de brassage et/ou outil de concassage (3) et le vecteur de direction (17) du sens de transport de l'extrudeuse (5) forment un angle (α) supérieur ou égal à 90° et inférieur ou égal à 180°, mesuré au point d'intersection des deux vecteurs de direction (17, 19) au niveau du bord de l'ouverture (8), du côté admission, situé en amont par référence au sens de rotation ou de mouvement (12) de l'outil de brassage et/ou outil de concassage (3), en particulier dans le point (20) situé le plus loin en amont sur ce bord ou l'ouverture (8).

9. Dispositif selon l'une quelconque des revendications 1 à 8, **caractérisé en ce que** le vecteur de direction (19) du sens de rotation ou de mouvement (12) et le vecteur de direction (17) du sens de transport de l'extrudeuse (5) forment un angle (ß) entre 170° et 180°, mesuré au point d'intersection des deux vecteurs de direction (17, 19) au milieu de l'ouverture (8).

10. Dispositif selon l'une quelconque des revendications 1 à 9, **caractérisé en ce que** la distance (18) est supérieure ou égale à la moitié du diamètre intérieur du carter (16) de l'extrudeuse (5) ou de la vis transporteuse (6), et/ou supérieure ou égale à 7 %, de préférence supérieure ou égale à 20 % du rayon du conteneur (1), ou **en ce que** la distance (18) est supérieure ou égale au rayon du conteneur (1),
ou
**en ce que** le prolongement imaginaire de l'axe longitudinal (15) de l'extrudeuse (5) est disposé dans le sens opposé au sens de transport à la manière d'une sécante à la section transversale du conteneur (1) et traverse au moins par zones le volume intérieur du conteneur (1),
ou
**en ce que** l'extrudeuse (5) est raccordée tangentiellement au conteneur (1) ou s'étend tangentiellement à la section transversale du conteneur (1), ou **en ce que** l'axe longitudinal (15) de l'extrudeuse (5) ou de la vis transporteuse (6) ou l'axe longitudinal de la vis transporteuse (6) la plus proche de l'ouverture d'admission (80) ou la paroi intérieure du carter (16) ou l'enveloppante de la vis transporteuse (6) s'étendent tangentiellement à la face intérieure de la paroi latérale (9) du conteneur (1), de préférence la vis transporteuse (6) étant reliée, au niveau de sa face frontale (7), à un système d'entraînement, et transportant, au niveau de son extrémité frontale opposée, vers une ouverture de sortie, en particulier une tête d'extrudeuse, située à l'extrémité frontale du carter (16).

11. Dispositif selon l'une quelconque des revendications 1 à 10, **caractérisé en ce que** l'ouverture (8) communique avec l'ouverture d'admission (80) immédiatement et directement et sans distance importante, en particulier sans distance de transition ou vis transporteuse de transport.

12. Dispositif selon l'une quelconque des revendications 1 à 11, **caractérisé en ce que** l'outil de brassage et/ou outil de concassage (3) comporte des outils et/ou des lames de coupe (14) qui agissent dans le sens de rotation ou de mouvement (12) sur la matière plastique en la concassant, la coupant et la chauffant, les outils et/ou les lames de coupe (14) étant réalisés ou disposés de préférence sur ou contre un porte-outil (13) rotatif, en particulier un disque de support (13), disposé en particulier parallèlement à la surface de fond (2),
et/ou
**en ce que** les zones avant ou bords avant (22), agissant sur la matière plastique et orientés dans le sens de rotation ou de mouvement (12), des outils de brassage et/ou outils de concassage (3) ou des lames de coupe (14) sont configurés, engagés, cintrés et/ou disposés différemment des zones arrière ou aval par référence au sens de rotation ou de mouvement (12).

13. Dispositif selon l'une quelconque des revendications 1 à 12, **caractérisé en ce que** le conteneur (1) a une forme sensiblement cylindrique circulaire avec une surface de fond (2) plane et une paroi latérale (9) en forme d'enveloppe cylindrique orientée verticalement à cette dernière, et/ou l'axe de rotation (10) des outils de brassage et/ou outils de concassage (3) coïncide avec l'axe médian central du conteneur (1), et/ou l'axe de rotation (10) ou l'axe médian central sont orientés verticalement et/ou normalement à la surface de fond (2).

14. Dispositif selon l'une quelconque des revendications 1 à 13, **caractérisé en ce que** le porte-outil (13) le plus bas ou l'outil le plus bas des outils de brassage et/ou outils de concassage (3) et/ou l'ouverture (8) sont disposés à proximité du fond à faible distance de la surface de fond (2), en particulier dans la zone du quart inférieur de la hauteur du conteneur (1), de préférence à une distance de la surface de fond (2) de 10 mm à 400 mm.

15. Dispositif selon l'une quelconque des revendications 1 à 14, **caractérisé en ce que** l'extrudeuse (5) est une extrudeuse à vis unique (6) avec une seule vis transporteuse (6) destinée à comprimer ou est une extrudeuse à deux vis ou à plusieurs vis, les diamètres d des différentes vis transporteuses (6) étant identiques les uns aux autres.
